# FASCICULE DE BREVET EUROPEEN

(11) **EP 1 230 834 B1**
(45) Date de publication et mention de la délivrance du brevet: **04.06.2008**
(21) Numéro de dépôt: 02360052.1
(22) Date de dépôt: 04.02.2002
(51) Int. Cl.: A01C 7/04, A01C 19/00

(54) **Semoir agricole**
Drillmaschine
Seed drill

(30) Priorité: 12.02.2001 FR 0102201
(43) Date de publication de la demande: 14.08.2002
(73) Titulaire: KUHN S.A., 67700 Saverne (FR)
(72) Inventeur: Audigie, Jean-Charles, 89340 Villeneuve La Guyard (FR)
(74) Mandataire: Andres, Jean-Claude

(56) Documents cités:
- DE-A- 3 602 074
- DE-A- 3 633 382
- US-A- 5 024 173

## Description

La présente invention se rapporte au domaine technique générale du machinisme agricole. Elle concerne plus particulièrement un semoir comportant au moins un dispositif de dosage entraîné par un mécanisme muni d'un arbre d'entrée, d'un pignon et d'une poignée de commande.

Un semoir selon le préambule de la revendication 1 est connu par le document US 5 024 173. Ce semoir comporte un dispositif de dosage pour fertilisant qui est entraîné par un mécanisme au moyen d'un pignon et d'un arbre d'entrée. L'arbre d'entrée entraîne le dispositif de dosage via un arbre intermédiaire équipée d'une poignée de commande et d'un dispositif d'accouplement.

Un autre mécanisme d'entraînement est également connu de l'homme du métier. En effet, la société Amazonen-Werke fabrique et commercialise un semoir monograine (**Prospectus Amazone ED**). Cette machine connue comporte un châssis soutenant des organes d'implantation de graines dans le sol et une trémie respective pour chaque organe d'implantation. Entre la trémie et un organe d'implantation de graines se situe un organe de distribution entraîné par un mécanisme d'entraînement. Cette machine connue comporte également des roues d'entraînement disposées en avant des organes d'implantation. L'axe de rotation de chaque roue est sensiblement horizontal et sensiblement perpendiculaire à la direction d'avance du semoir. Lors du travail, lesdites roues roulent sur le sol et entraînent, via des organes de transmission, les organes de dosage. Ainsi la semence, initialement contenue dans la trémie, est tout d'abord dosée puis implantée dans le sol par les socs. Chaque mécanisme d'entraînement est équipé d'une poignée de débrayage permettant un embrayage et un débrayage de l'entraînement de l'organe de distribution de graines. Chaque mécanisme d'entraînement est équipé, en sus, d'une goupille de cisaillement destinée à protéger l'organe de distribution de toute surcharge.

En effet, lorsque le couple d'entraînement sur un élément semeur devient trop élevé, ladite goupille de cisaillement se rompt et l'entraînement de l'organe de distribution n'est plus assuré. Après remplacement de ladite goupille de cisaillement et avant de poursuivre le semis, l'utilisateur veut habituellement s'assurer que la cause de l'incident a bien été écartée. A cet effet, il a la possibilité d'entraîner manuellement l'organe de distribution en manoeuvrant lesdites roues d'entraînement.

Or cette manoeuvre est relativement pénible. En effet, l'utilisateur doit tout d'abord débrayer l'entraînement des organes de distribution qu'il ne veut pas vérifier. Puis après avoir manoeuvré lesdites roues d'entraînement, il doit à nouveau embrayer lesdits entraînements. De tels semoirs présentent donc un inconvénient manifeste.

Le but de la présente invention vise donc à remédier à cet inconvénient de l'état de la technique.

Conformément à la présente invention, ledit semoir se caractérise par le fait que quelque soit sa position, ladite poignée de commande est liée en rotation audit arbre d'entrée par l'intermédiaire d'un élément de sécurité, ledit élément de sécurité permet de transmettre le mouvement de rotation de ladite poignée de commande audit arbre d'entrée, que ladite poignée de commande n'est pas entraînée par ledit pignon dans au moins une position et que ledit pignon tourne de façon indépendante autour dudit arbre d'entrée dans cette position de la poignée. Ainsi avec un tel semoir, la vérification du fonctionnement de l'organe de dosage est grandement facilitée.

D'autres caractéristiques de l'invention, à considérer séparément ou dans toutes leurs combinaisons possibles, apparaîtront dans la description suivante d'un exemple de réalisation non limitatif de l'invention représenté sur les dessins annexés sur lesquels :
- la **figure 1** représente une vue latérale simplifiée, en position de travail, d'un semoir de précision conforme à l'invention,
- la **figure 2** représente une vue en coupe à une autre échelle, du mécanisme d'entraînement avec une poignée de commande en position travail,
- la **figure 3** représente une vue en coupe, du mécanisme d'entraînement de la figure 2 en position débrayée,
- la **figure 4** représente une vue en coupe, du mécanisme d'entraînement de la figure 2 en position sécurité,
- la **figure 5** représente une coupe partielle suivant V de la figure 2,
- la **figure 6** représente une coupe partielle suivant VI de la figure 2,
- la **figure 7** représente une coupe partielle suivant VII de la figure 4.

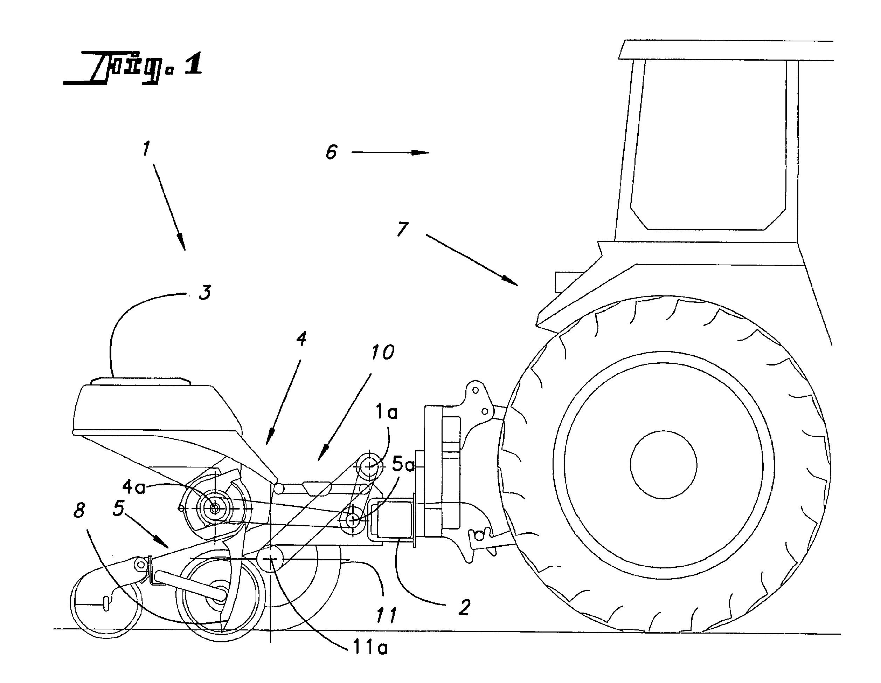

Le semoir (1) représenté sur la figure 1 comporte, d'une manière connue de l'homme du métier, un châssis (2), au moins un dispositif de stockage de graines (3), au moins un dispositif de dosage (4) et au moins un organe d'implantation (5).

Lors du travail, ledit semoir (1) est déplacé, suivant une direction et un sens d'avance indiqué par la flèche (6), sur un sol à ensemencer. La semence, initialement contenue dans ledit dispositif de stockage (3) est transportée jusqu'à l'organe d'implantation (5). Puis ladite semence est enfouie dans ledit sol au moyen de l'organe d'implantation (5). Le dispositif de dosage (4), quant à lui, permet de régler précisément la quantité de semence déposée en terre. Pour sa part, ledit châssis (2) permet de lier ledit semoir (1) à un véhicule moteur (7) partiellement représenté.

Dans la suite de la description, les notions "avant" et "arrière", "devant" et "derrière" sont définies par rapport au sens d'avance (6) et les notions "droite" et "gauche" sont définies en regardant ledit semoir (1) de l'arrière dans ledit sens d'avance (6).

Dans l'exemple de réalisation représenté sur la figure 1, ledit semoir (1) est du type "semoir de précision". A cet effet, ledit semoir (1) comprend plusieurs organes d'implantation de graines (5). Lesdits organes d'implantation (5) sont disposés à intervalle sensiblement régulier sur toute la largeur dudit châssis (2). D'une manière connue de l'homme du métier, chaque organe d'implantation (5) est lié audit châssis (2) et comporte une trémie de stockage de graines (3), un dispositif de dosage (4) et une goulotte (8). Lors du travail, chaque goulotte (8) creuse un sillon dans le sol et y dépose des graines.

D'une manière connue de l'homme de l'art, chaque dispositif de dosage (4) comporte un disque de distribution (non représenté) muni d'alvéoles à intervalles réguliers sur un diamètre. Ledit disque de distribution est entraîné en rotation autour de son axe (4a) au moyen d'un mécanisme d'entraînement (10). Chaque alvéole reçoit une graine et l'entraîne en rotation autour de l'axe (4a) jusqu'à l'ouverture d'éjection où la graine tombe par gravité dans ladite goulotte (8) puis dans la terre. Afin de garantir un dosage homogène, la vitesse de rotation dudit mécanisme d'entraînement (10) est avantageusement proportionnelle à la vitesse d'avance dudit semoir (1).

A cet effet dans l'exemple de réalisation représenté, ledit mécanisme d'entraînement (10) comporte avantageusement deux roues d'entraînement (11). Lors du travail, lesdites roues (11) roulent sur le sol autour d'un axe (11a) sensiblement horizontal et sensiblement transversal à ladite direction d'avance (6). Le mouvement de rotation desdites roues d'entraînement (11) est transmis audit dispositif de dosage (4) en plusieurs étapes. En effet, lesdites roues d'entraînement (11) entraînent un axe primaire (1a) dudit semoir (1). La direction dudit axe primaire (1a) est sensiblement parallèle à ladite direction de l'axe (11a) desdites roues (11).

Pour sa part l'axe primaire (1a) transmet son mouvement de rotation à un axe d'entraînement (5a) desdits organes d'implantation (5). La direction dudit axe d'entraînement (5a) est sensiblement parallèle à ladite direction de l'axe primaire (1a). L'axe (5a) entraîne, quant à lui, un pignon (14) au moyen d'une chaîne (non représentée). Ainsi, ledit pignon (14) est entraîné en rotation autour d'un axe (14a) à une vitesse proportionnelle à la vitesse d'avancement dudit semoir de précision (1). La direction dudit axe (14a) est sensiblement parallèle à ladite direction de l'axe d'entraînement (5a). Ledit axe (14a) est avantageusement confondu avec l'axe (4a) du disque de distribution.

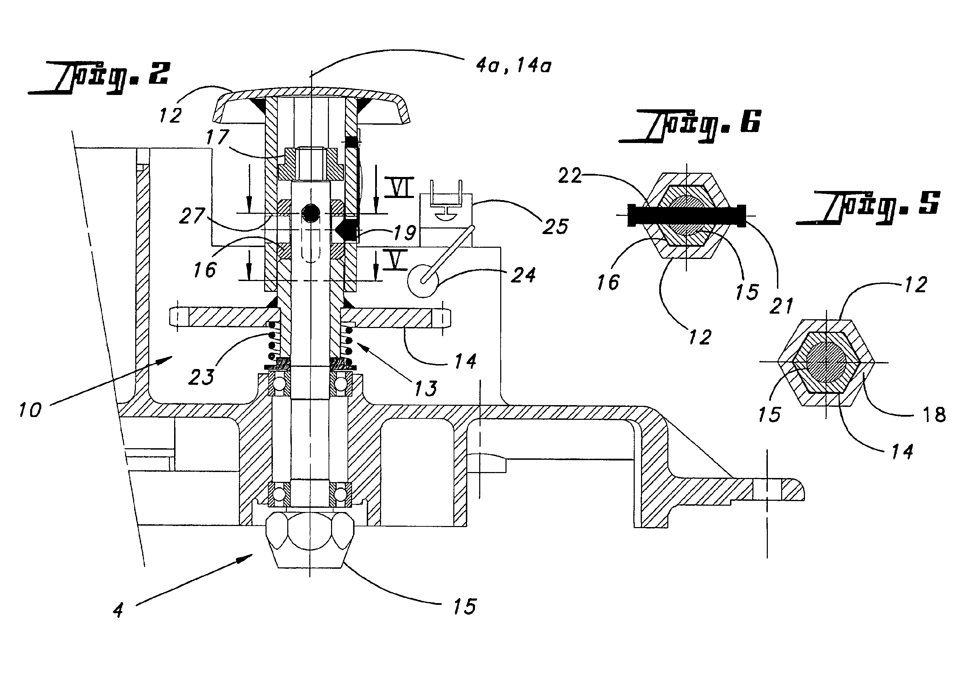

Dans le mode de réalisation représenté sur les figures 2 à 4, ledit mécanisme d'entraînement (10) comporte, en sus, un arbre d'entrée (15) supportant ledit pignon (14), un moyeu central (16) et un dispositif de sécurité mécanique (13). Ledit disque de distribution est lié à une extrémité dudit arbre d'entrée (15). L'autre extrémité dudit arbre d'entrée (15) supporte un écrou de centrage (17) coiffé d'une poignée de commande (12).

Ladite poignée de commande (12) comporte une forme complémentaire (18) épousant la géométrie dudit pignon (14). A la lumière de la figure 5, ladite forme complémentaire (18) est avantageusement hexagonale. Ladite poignée de commande (12) est indexée en position travail, au moyen d'un pion d'indexage à ressort (19). Ce dernier est logé dans une ouverture (20) ménagée d'une part dans ladite poignée de commande (12) et d'autre part dans ledit moyeu central (16). Ladite forme hexagonale (18) permet l'entraînement de ladite poignée de commande (12) par ledit pignon (14) autour de l'axe (14a). Le mouvement de rotation de ladite poignée de commande (12) est transmit à l'arbre d'entrée (15) par l'intermédiaire d'un élément de sécurité (21).

Selon la figure 6, l'élément de sécurité (21) est logé dans un orifice (22) traversant les pièces suivantes : ladite poignée de commande (12), ledit moyeu central (16) et l'arbre d'entrée (15). L'élément de sécurité (21) en combinaison avec un ressort de compression (23) constitue ledit dispositif de sécurité mécanique (13).

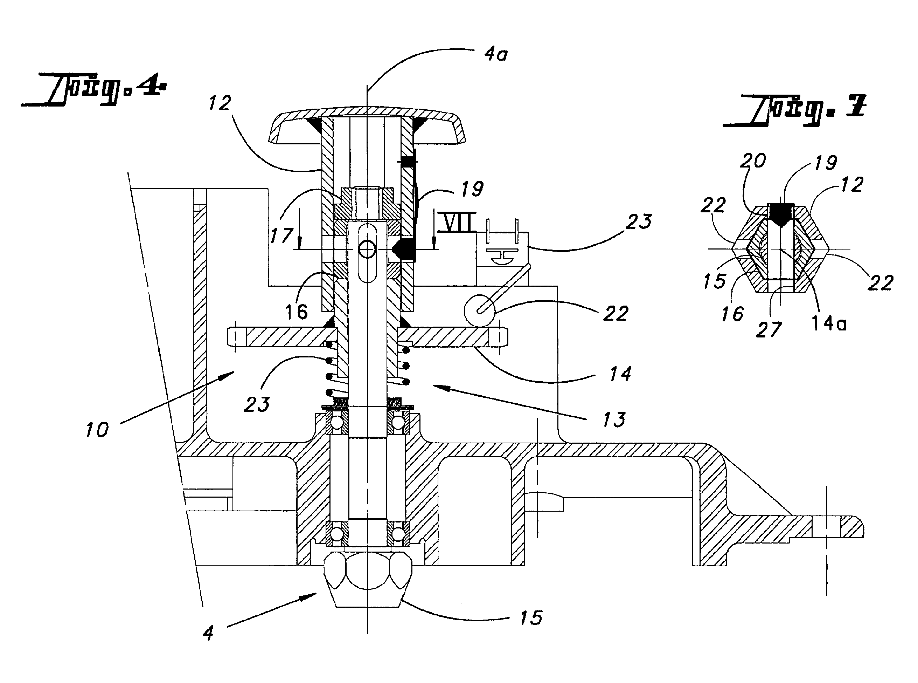

La figure 4 représente une position de sécurité dans laquelle ledit dispositif de sécurité mécanique (13) s'est activé. En effet, lorsque le couple d'entraînement maximal admissible pour l'arbre d'entrée (15) a été dépassé, l'élément de sécurité (21) se casse et le disque de distribution n'est plus entraîné au moyen de ladite poignée de commande (12). La rupture dudit élément de sécurité (21) permet audit ressort de compression (23) de se détendre et de translater, suivant l'axe de distribution (4a), un ensemble de pièces en butée contre ledit écrou de centrage (17). Cet ensemble de pièces est formé par lesdites pièces : ledit pignon (14), ledit moyeu central (16), ledit pion d'indexage à ressort (19) et ladite poignée de commande (12). Lors de la rupture de l'élément de sécurité (21), ladite poignée de commande (12) se place avantageusement dans une position sécurité. Lors de cette translation, ledit pignon (14) entre aussitôt en contact avec un galet (24). Ledit galet (24) étant relié à un interrupteur électrique (25) coupe immédiatement le passage du courant électrique. L'interrupteur électrique (25) envoie également un signal à un boîtier de réception (26). Ledit boîtier de réception (26) est de préférence situé dans la cabine dudit véhicule moteur (7) afin de déclencher une alarme. Ledit galet (24), l'interrupteur électrique (25) et ledit boîtier de réception (26) constitue avantageusement un dispositif d'alerte (9). Ledit dispositif d'alerte (9) informe instantanément l'utilisateur dudit semoir (1) d'un dysfonctionnement desdits organes d'implantation (5). L'alarme est avantageusement du type sonore et/ou visuel. Cette alarme permet à l'utilisateur d'intervenir immédiatement sur l'organe d'implantation (5) défectueux après l'avoir identifié de part la position de ladite poignée de commande (12). Ladite poignée de commande (12) est avantageusement accessible et placée du côté droit d'un organe d'implantation (5) et dans un plan sensiblement horizontal en dessous de ladite trémie (3).

L'élément de sécurité (21) réalisé dans l'exemple représenté au moyen d'un boulon de cisaillement (21) se casse de préférence en trois morceaux. Deux d'entre eux, aux extrémités, sont éjectés par l'orifice (22). Le troisième morceau, situé au centre et pris dans l'arbre d'entrée (15), s'extrait dudit mécanisme d'entraînement (10) par un trou d'évacuation (27). A la lumière de la figure 7, ledit trou d'évacuation (27) est de préférence symétrique, par rapport audit axe (14a), à ladite ouverture (20) permettant l'indexage de ladite poignée de commande (12).

Dans cette position de sécurité, ladite poignée de commande (12) reste indexée dans ledit moyeu central (16) et ne sera pas perdue du fait de l'incident déclenchant la sécurité. Pour repasser dans une position de travail, il suffit de remplacer ledit boulon (21) en poussant sur ladite poignée de commande (12) pour aligner les trous (22) des pièces suivantes : l'arbre d'entrée (15), ladite poignée de commande (12) et ledit moyeu central (16).

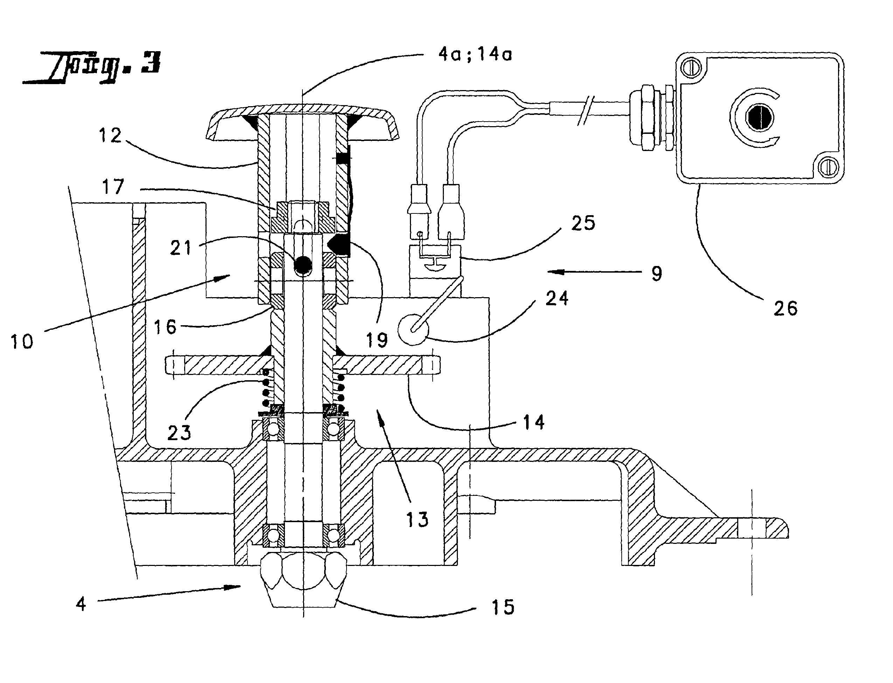

La figure 3 représente une position débrayée de ladite poignée de commande (12). Dans cette position, ledit pion d'indexage à ressort (19) est situé entre ledit moyeu central (16) et l'écrou de centrage (17). Ladite poignée de commande (12) n'est plus entraînée par ledit pignon (14). Pour sa part, ledit pignon (14) est toujours encore entraîné par ladite chaîne et tourne de façon indépendante autour dudit arbre d'entrée (15). Dans cette configuration, ledit disque de distribution peut être entraîné manuellement par ladite poignée de commande (12) par l'intermédiaire dudit boulon (21). Avantageusement lorsque ladite poignée de commande (12) est débrayée, l'utilisateur peut ainsi vérifier le bon fonctionnement du disque de distribution de graines. Dans cette configuration, ledit pignon (14) n'entre pas en contact avec ledit galet (24). L'interrupteur électrique (25) n'envoie pas d'information d'alerte audit boîtier de réception (26).

Le mécanisme d'entraînement (10) et le semoir de précision (1) qui viennent d'être décrits, ne sont qu'un exemple de réalisation et d'utilisation qui ne saurait en aucun cas limiter le domaine de protection défini par les revendications suivantes. Différentes modifications restent possibles, notamment en ce qui concerne la constitution des divers éléments ou par substitution d'équivalents techniques.

C'est ainsi qu'il est parfaitement possible d'utiliser le mécanisme d'entraînement (10) de la présente invention sur un semoir en ligne.

## Revendications

1. Semoir comportant au moins un dispositif de dosage (4) entraîné par un mécanisme (10) muni d'un arbre d'entrée (15), d'un pignon (14) et d'une poignée de commande (12), ***caractérisé par le fait* que** quelque soit sa position ladite poignée de commande (12) est liée en rotation audit arbre d'entrée (15) par l'intermédiaire d'un élément de sécurité (21), ledit élément de sécurité (21) permet de transmettre le mouvement de rotation de ladite poignée de commande (12) audit arbre d'entrée (15), que ladite poignée de commande (12) n'est pas entraînée par ledit pignon (14) dans au moins une position et que ledit pignon (14) tourne de façon indépendante autour dudit arbre d'entrée (15) dans cette position de la poignée.

2. Semoir selon la revendication 1, ***caractérisé par le fait que*** ladite poignée de commande (12) peut occuper au moins deux positions par rapport audit arbre d'entrée (15).

3. Semoir selon la revendication 2, ***caractérisé par le fait que*** ladite poignée de commande (12) est indexée au moyen d'un pion d'indexage (19).

4. Semoir selon la revendication 2 ou 3, ***caractérisé par le fait que*** dans au moins une position, ladite poignée de commande (12) est entraînée par ledit pignon (14).

5. Semoir selon la revendication 2 ou 3, ***caractérisé par le fait que*** dans au moins une position, ladite poignée de commande (12) est désaccouplée dudit pignon (14).

6. Semoir selon l'une quelconque des revendications 1 à 5, ***caractérisé par le fait que*** ledit mécanisme d'entraînement (10) comporte un dispositif de sécurité (13).

7. Semoir selon la revendication 6, ***caractérisé par le fait que*** ledit dispositif de sécurité (13) se compose d'un ressort de compression (23) et d'un élément de sécurité (21).

8. Semoir selon la revendication 7, ***caractérisé par le fait que*** ledit élément de sécurité (21) lie en rotation ladite poignée de commande (12) audit arbre d'entrée (15).

9. Semoir selon la revendication 7 ou 8, ***caractérisé par le fait qu'***après rupture dudit élément de sécurité (21), ledit ressort de compression (23) pousse ledit pignon (14) et ladite poignée de commande (12) en translation suivant un axe longitudinal (14a) dudit arbre (15) contre un écrou de centrage (17).

10. Semoir selon l'une quelconque des revendications 7 à 9, ***caractérisé par le fait que*** ledit élément de sécurité (21) est un boulon de cisaillement.

11. Semoir selon l'une quelconque des revendications 1 à 10, ***caractérisé par le fait que*** ladite poignée de commande (12) présente une forme complémentaire (18) audit pignon (14).

12. Semoir selon la revendication 11, ***caractérisé par le fait que*** ladite forme complémentaire (18) est hexagonale.

13. Semoir selon l'une quelconque des revendications 1 à 12, ***caractérisé par le fait que*** ledit mécanisme d'entraînement (10) comporte un dispositif d'alerte (9).

14. Semoir selon l'une quelconque des revendications 1 à 13, ***caractérisé par le fait que*** ledit dispositif d'alerte (9) comporte un galet (24), un interrupteur électrique (25) et un boîtier de réception (26).

15. Semoir selon la revendication 14 prise en combinaison avec la revendication *9, **caractérisé par le fait qu'***une alarme est activée lorsque ledit pignon (14) entre en contact avec ledit galet (24).

16. Semoir selon l'une quelconque des revendications 13 à 15, ***caractérisé par le fait que*** l'alarme est de type sonore et/ou visuel.

17. Semoir selon l'une quelconque des revendications 1 à 16, ***caractérisé par le fait que*** ledit semoir est du type semoir de précision.

## Claims

1. Seed drill comprising at least one metering device (4) driven by a mechanism (10) equipped with an input shaft (15), with a pinion (14) and with a control handle (12), ***characterized in* that**, independently of its position, the said control handle (12) is connected in terms of rotation to the said input shaft (15) by means of a safety element (21), the said safety element (21) makes it possible to transmit the rotational movement of the said control handle (12) to the said input shaft (15), ***in* that** the said control handle (12) is not driven by the said pinion (14) in at least one position and **in that** the said pinion (14) rotates independently about the said input shaft (15) in this position of the control handle.

2. Seed drill according to claim 1, ***characterized in* that** the said control handle (12) can occupy at least two positions with respect to the said input shaft (15).

3. Seed drill according to claim 2, ***characterized in* that** the said control handle (12) is indexed using an indexing peg (19).

4. Seed drill according to claim 2 or 3, ***characterized in* that**, in at least one position, the said control handle (12) is driven by the said pinion (14).

5. Seed drill according to claim 2 or 3, ***characterized in* that**, in at least one position, the said control handle (12) is uncoupled from the said pinion (14).

6. Seed drill according to any one of claims 1 to 5, ***characterized in* that** the said drive mechanism (10) comprises a safety device (13).

7. Seed drill according to claim 6, ***characterized in* that** the said safety device (13) is made up of a compression spring (23) and of a safety element (21).

8. Seed drill according to claim 7, ***characterized in* that** the said safety element (21) connects the said control handle (12) to the said input shaft (15) in terms of rotation.

9. Seed drill according to claim 7 or 8, ***characterized in* that**, once the said safety element (21) has broken, the said compression spring (23) pushes the said pinion (14) and the said control handle (12) in translation along a longitudinal axis (14a) of the said shaft (15) against a centering nut (17).

10. Seed drill according to any one of claims 7 to 9, ***characterized in* that** the said safety element (21) is a shear bolt.

11. Seed drill according to any one of claims 1 to 10, ***characterized in* that** the said control handle (12) has a shape (18) that complements the said pinion (14).

12. Seed drill according to claim 11, ***characterized in* that** the said complementary shape (18) is hexagonal.

13. Seed drill according to any one of claims 1 to 12, ***characterized in* that** the said drive mechanism (10) comprises a warning device (9).

14. Seed drill according to any one of claims 1 to 13, ***characterized in* that** the said warning device (9) comprises a roller (24), an electric switch (25) and a receiving unit (26).

15. Seed drill according to claim 14 taken in combination with claim 9, ***characterized in* that** an alarm is activated when the said pinion (14) is in contact with the said roller (24).

16. Seed drill according to any one of claims 13 to 15, ***characterized in* that** the the alarm is of the audible and/or visual type.

17. Seed drill according to any one of claims 1 to 16, ***characterized in* that** the said seed drill is of the precision planter type.

## Patentansprüche

1. Drillmaschine mit mindestens einer Dosiervorrichtung (4), die von einem Mechanismus (10) angetrieben wird, der mit einer Eingangswelle (15), einem Ritzel (14) und einem Steuergriff (12) versehen ist, ***dadurch gekennzeichnet,* dass** der Steuergriff (12) unabhängig von seiner Position drehfest mit der Eingangswelle (15) über ein Sicherheitselement (21) verbunden ist, wobei es das Sicherheitselement (21) ermöglicht, die Drehbewegung des Steuergriffes (12) auf die Eingangswelle (15) zu übertragen, dass der Steuergriff (12) nicht vom Ritzel (14) in mindestens eine Position angetrieben wird, und dass sich das Ritzel (14) unabhängig um die Eingangswelle (15) in dieser Position des Griffes dreht.

2. Drillmaschine nach Anspruch 1, ***dadurch gekennzeichnet,* dass** der Steuergriff (12) mindestens zwei Positionen in Bezug zur Eingangswelle (15) einnehmen kann.

3. Drillmaschine nach Anspruch 2, ***dadurch gekennzeichnet,* dass** der Steuergriff (12) mittels eines Indexierungsstiftes (19) indexiert ist.

4. Drillmaschine nach Anspruch 2 oder 3, ***dadurch gekennzeichnet,* dass** in mindestens einer Position der Steuergriff (12) von dem Ritzel (14) angetrieben wird.

5. Drillmaschine nach Anspruch 2 oder 3, ***dadurch gekennzeichnet,* dass** in mindestens einer Position der Steuergriff (12) vom Ritzel (14) entkoppelt ist.

6. Drillmaschine nach irgend einem der Ansprüche 1 bis 5, ***dadurch gekennzeichnet,* dass** der Antriebsmechanismus (10) eine Sicherheitsvorrichtung (13) umfasst.

7. Drillmaschine nach Anspruch 6, ***dadurch gekennzeichnet,* dass** die Sicherheitsvorrichtung (13) aus einer Druckfeder (23) und einem Sicherheitselement (21) besteht.

8. Drillmaschine nach Anspruch 7, ***dadurch gekennzeichnet,* dass** das Sicherheitselement (21) den Steuergriff (12) mit der Eingangswelle (15) drehfest verbindet.

9. Drillmaschine nach Anspruch 7 oder 8, ***dadurch gekennzeichnet,* dass** nach Bruch des Sicherheitselements (21) die Druckfeder (23) das Ritzel (14) und den Steuergriff (12) in Translation entlang einer Längsachse (14a) der Welle (15) gegen eine Zentriermutter (17) verschiebt.

10. Drillmaschine nach irgend einem der Ansprüche 7 bis 9, ***dadurch gekennzeichnet,* dass** das Sicherheitselement (21) ein Abscherbolzen ist.

11. Drillmaschine nach irgend einem der Ansprüche 1 bis 10, ***dadurch gekennzeichnet,* dass** der Steuergriff (12) eine komplementäre Form (18) zum Ritzel (14) aufweist.

12. Drillmaschine nach Anspruch 11, ***dadurch gekennzeichnet,* dass** die komplementäre Form (18) hexagonal ist.

13. Drillmaschine nach irgend einem der Ansprüche 1 bis 12, ***dadurch gekennzeichnet,* dass** der Antriebsmechanismus (10) eine Warnvorrichtung (9) umfasst.

14. Drillmaschine nach irgend einem der Ansprüche 1 bis 13, ***dadurch gekennzeichnet,* dass** die Warnvorrichtung (9) eine Rolle (24), einen elektrischen Schalter (25) und ein Empfangsgehäuse (26) umfasst.

15. Drillmaschine nach Anspruch 14 in Kombination mit Anspruch 9, ***dadurch gekennzeichnet,* dass** ein Alarm aktiviert wird, wenn das Ritzel (14) mit der Rolle (24) in Kontakt tritt.

16. Drillmaschine nach irgend einem der Ansprüche 13 bis 15, ***dadurch gekennzeichnet,* dass** der Alarm vom Typ Ton und/oder visueller Alarm ist.

17. Drillmaschine nach irgend einem der Ansprüche 1 bis 16, ***dadurch gekennzeichnet,* dass** die Drillmaschine vom Typ Einzelkorndrillmaschine ist.
